# EUROPÄISCHE PATENTANMELDUNG

(11) **EP 0 916 532 A2**
(43) Veröffentlichungstag der Anmeldung: **19.05.1999**
(21) Anmeldenummer: 98121899.3
(22) Anmeldetag: 18.11.1998
(51) Int. Cl.: B60J 1/20

(54) **Rollo, insbesondere für Seitenfenster von Kraftfahrzeugen**

(30) Priorität: 18.11.1997 DE 29720381 U
(71) Anmelder: Hüppe Form Sonnenschutzsysteme GmbH, 26133 Oldenburg (DE)
(72) Erfinder: Lattek, Siegfried, 74889 Sinsheim (DE); Kappes, Jürgen, 74889 Sinsheim (DE)
(74) Vertreter: Eisenführ, Speiser & Partner

(57) **Zusammenfassung**

Die Erfindung betrifft ein Rollo, insbesondere für Seitenfenster von Kraftfahrzeugen mit einem Behang (1), einer den Behang (1) auf- und abwickelnden Wickelwelle (3) und einer Halteeinrichtung (2, 4, 5, 6, 14), an der die Wickelwelle (3) um ihre Längsachse drehbar gelagert ist, zur Halterung der Wickelwelle (3) an einem Abschnitt (15a, 15b) eines Rahmens (15) o.dgl., insbesondere eines Tür- oder Fensterrahmens. Das Besondere der Erfindung besteht darin, daß die Halteeinrichtung (2, 4, 5, 6, 14) mindestens zwei Klemmittel (4 und 5, 6) für einen Klemmeingriff mit dem Abschnitt (15a, 15b) des Rahmens 15 aufweist, wobei mindestens ein Klemmittel (5, 6) etwa in Längsrichtung der Wickelwelle (3) beweglich gelagert und in Richtung (11) auf den benachbarten Rahmenabschnitt (15b) federnd vorgespannt ist.

## Beschreibung

Die Erfindung betrifft ein Rollo, insbesondere für Seitenfenster von Kraftfahrzeugen, mit einem Behang, einer den Behang auf- und abwickelnden Wickelwelle und einer Halteeinrichtung, an der die Wickelwelle um ihre Längsachse drehbar gelagert ist, zur Halterung der Wickelwelle an einem Abschnitt eines Rahmens o.dgl., insbesondere eines Tür- oder Fensterrahmens.

Ein solches Rollo ist bekannt und befindet sich in vielfältiger Form im praktischen Einsatz.

Da ein großer Bedarf an einem Rollo besteht, das zum einen besonders einfach am Rahmen halterbar und zum anderen insbesondere an Seitenfenstern von Kraftfahrzeugen problemlos nachrüstbar sein soll, ist es Aufgbe der vorliegenden Erfindung, ein solches Rollo zu schaffen.

Diese Aufgabe wird erfindungsgemäß dadurch gelöst, daß bei einem Rollo der eingangs genannten Art die Halteeinrichtung mindestens zwei Klemmittel für einen Klemmeingriff mit dem Abschnitt des Rahmens aufweist, wobei mindestens ein Klemmittel etwa in Längsrichtung der Wickelwelle beweglich gelagert und in Richtung auf den benachbarten Rahmenabschnitt federnd vorgespannt ist.

Das erfindungsgemäß Rollo läßt sich besonders einfach am Rahmen haltern, indem es mit seiner Halteeinrichtung zwischen gegenüberliegende Abschnitte des Rahmens geklemmt wird. Dies wird erfindungsgemäß dadurch erreicht, daß mindestens zwei Klemmittel vorgesehen sind, von denen mindestens das eine etwa in Längsrichtung der Wickelwelle zueinander beweglich angeordnet und in Richtung auf den benachbarten Rahmenabschnitt federnd vorgespannt ist, wodurch das eine Klemmittel an dem einen Abschnitt des Rahmens und das andere Klemmittel am gegenüberliegenden anderen Abschnitt des Rahmens unter Federdruck in Anlage und somit in Klemmeingriff mit dem Rahmen bringbar ist.

Mit der erfindungsgemäße Konstruktion läßt sich das Rollo nicht nur besonders einfach an einem Rahmen anbringen, sondern auch an nahezu jedem Rahmen und insbesondere an Seitenfenstern von Kraftfahrzeugen nachrüsten.

Die Klemmittel können wahlweise einstückig ausgebildet und dabei direkt in Klemmeingriff mit dem Abschnitt des Rahmens bringbar sein oder auch aus mehreren miteinander verbindbaren bzw. verbundenen Elementen bestehen. Ferner ist es auch denkbar, zwei Klemmittel etwa in Längsrichtung der Wickelwelle zueinander beweglich zu lagern und beide federnd voneinander weg und in Richtung des jeweils benachbarten Rahmenabschnittes vorzuspannen.

Um das erfindungsgemäße Rollo an nahezu jedem Rahmen anbringen zu können, sollte es an die Größe des gewünschten Rahmens anpassbar ausgeführt sein, was vorzugsweise dadurch erzielt werden kann, daß der Abstand der Klemmittel zueinander einstellbar ist. Alternativ oder zusätzlich können auch Zwischenstücke verwendet werden, die zwischen einem Klemmittel oder den Klemmitteln einerseits und dem Rahmen andererseits eingesetzt werden.

Insbesondere für eine Anordnung des Rollos innerhalb des Rahmens sollte das eine Klemmittel über das eine Ende und/oder das andere Klemmittel über das andere Ende der Wickelwelle hinausragen.

Eine gegenwärtig besonders bevorzugte Weiterbildung dieser Ausführung, bei welcher die Wickelwelle hohl ist, zeichnet sich dadurch aus, daß das eine und/oder andere Klemmittel teilweise innerhalb der Wickelwelle angeordnet ist und mit seinem äußeren Ende aus dem benachbarten Ende der Wickelwelle herausragt, um in Klemmeingriff mit dem Rahmen zu gelangen.

Sofern zumindest ein Abschnitt des oder der Klemmittel als Stab ausgebildet ist, sollte das Klemmittel zweckmäßigerweise mit seinem stabförmigen Abschnitt koaxial zur Wickelwelle angeordnet sein. Dabei kann der stabförmige Abschnitt des Klemmittels vorzugsweise auch noch als Lager zur drehbaren Lagerung der Wickelwelle dienen. In diesem Fall sollte der stabförmige Abschnitt vorzugsweise eine zylindrische Form besitzen, um ein Gleitlager für die Wickelwelle zu bilden.

Eine besonders einfache und zugleich stabile Konstruktion läßt sich durch eine teleskopische Ausbildung der Klemmittel realisieren, indem das eine Klemmittel hohl ist und das andere Klemmittel nach Art eines Teleskops teilweise aufnimmt, so daß das andere Klemmittel verschieblich in dem einen Klemmittel gelagert ist.

Eine ebenfalls gegenwärtig besonders bevorzugte Ausführung, bei welcher die Wickelwelle in Aufwickelrichtung durch eine Feder vorgespannt ist, zeichnet sich dadurch aus, daß die Feder mit ihrem einen Ende an der Wickelwelle und mit ihrem anderen Ende an einem Klemmittel befestigt ist und dadurch gleichzeitig dieses Klemmittel in Richtung auf den benachbarten Rahmenabschnitt vorspannt. Bei dieser Ausführung wird in geschickter Weise die für die Vorspannung der Wickelwelle in Aufwickelrichtung vorhandene Feder gleichzeitig auch zur Vorspannung des Klemmittels in axialer Richtung verwendet, so daß eine weitere Feder nicht erforderlich ist. Wenn beide Klemmittel jeweils axial beweglich gelagert und federnd vorgespannt sein sollen, müssen jedoch zwei Federn verwendet werden, wobei entweder jeweils eine Feder zwischen der Wickelwelle und dem zugehörigen Klemmittel in der zuvor beschriebenen Weise wirken oder die eine Feder nur zur Vorspannung der Wickelwelle in Aufwickelrichtung vorgesehen und die andere Feder zwischen den beiden Klemmitteln befestigt sein kann. Ferner ist es natürlich auch denkbar, für die verschiedenen Funktion jeweils eine gesonderte Feder vorzusehen, also für die Vorspannung der Wickelwelle in Aufwickelrichtung eine Feder und für die axiale Vorspannung des oder der Klemmittel jeweils eine weitere Feder.

Wird die Feder in der zuvor beschriebenen Weise gleichzeitig zur Vorspannung der Wickelwelle in Aufwickelrichtung sowie zur axialen Vorspannung eines Klemmittels verwendet, so sollte diese Feder zweckmäßiger Weise als Spiralfeder ausgebildet sein, da eine solche Feder in konstruktiv besonders einfacher Weise eine Vorspannung sowohl in Drehrichtung als auch in axialer Richtung erzeugen kann. Falls das Klemmittel mit einem stabförmigen Abschnitt versehen ist, der gleichzeitig auch noch als Lager zur drehbaren Lagerung der Wickelwelle dient, sollte zweckmäßigerweise die Spiralfeder zumindest teilweise um diesen stabförmigen Abschnitt herum angeordnet sein, womit sich eine besonders platzsparende Anordnung erzielen läßt.

Bei einer Ausführung, die für einen Fensterrahmen mit einer Nut zur Führung einer beweglichen Glasscheibe bestimmt ist, sollte vorzugsweise mindestens ein Klemmittel an seinem freien Ende derart ausgebildet sein, daß es in Eingriff mit der Nut bringbar ist. Zweckmäßigerweise kann dabei das freie Ende des oder der Klemmittel gabelförmig ausgebildet sein.

An dieser Stelle sei angemerkt, daß unter den hier gewählten Begriff "Rahmen" nicht nur Tür- und Fensterrahmen, sondern beispielsweise auch die Laibung eines Fensters sowie im übrigen ganz allgemein jede Art von durch Wände, Platten oder sonstige Gegenstände begrenzter Einfassung einer Öffnung oder eines Durchbruches fallen soll, in die das erfindungsgemäße Rollo eingesetzt werden kann.

Nachfolgend wird ein bevorzugtes Ausführungsbeispiel der Erfindung anhand der beiliegenden Figuren näher erläutert. Es zeigen.
- Fig. 1: das erfindungsgemäße Rollo in einer besonderen Ausführung als Seitenfensterrollo für Kraftfahrzeuge; und
- Fig. 2: eine Querschnittsansicht eines Details entlang der Linie A - B von Fig. 1.

Das in den Figuren dargestellte Rollo weist einen Behang 1 in gewöhnlicher Weise sowie eine Kassette 2 auf, in der eine Wickelwelle 3 zum Auf- und Abwickeln des Behanges 1 um ihre Längsachse drehbar gelagert ist. Die Kassette 2 und somit die Wickelwelle 3 werden in nachfolgender noch näher beschriebener Weise mittels zweier Seitenteile 4, 6 zwischen im wesentlich vertikal verlaufenden, schienenförmigen Teilen 15a, 15b eines Fensterrahmens 15 geklemmt. Im Rahmen 15 ist eine Fensterscheibe 12 derart gelagert, daß sie in vertikaler Richtung 9 zum Öffnen und Schließen bewegbar geführt ist.

In der dargestellten Ausführung erfolgt das Auf- und Abwickeln des Behanges 1 durch die Fensterscheibe 12, an deren oberen Rand ein Haken 7 eingehängt ist, der mittels einer Niete 8 an einem Fallstab 10 angebracht ist, welcher am von der Wickelwelle 3 entfernt gelegenen freien Ende des Behanges 1 befestigt ist und sich etwa parallel zur Wickelwelle 3 erstreckt.

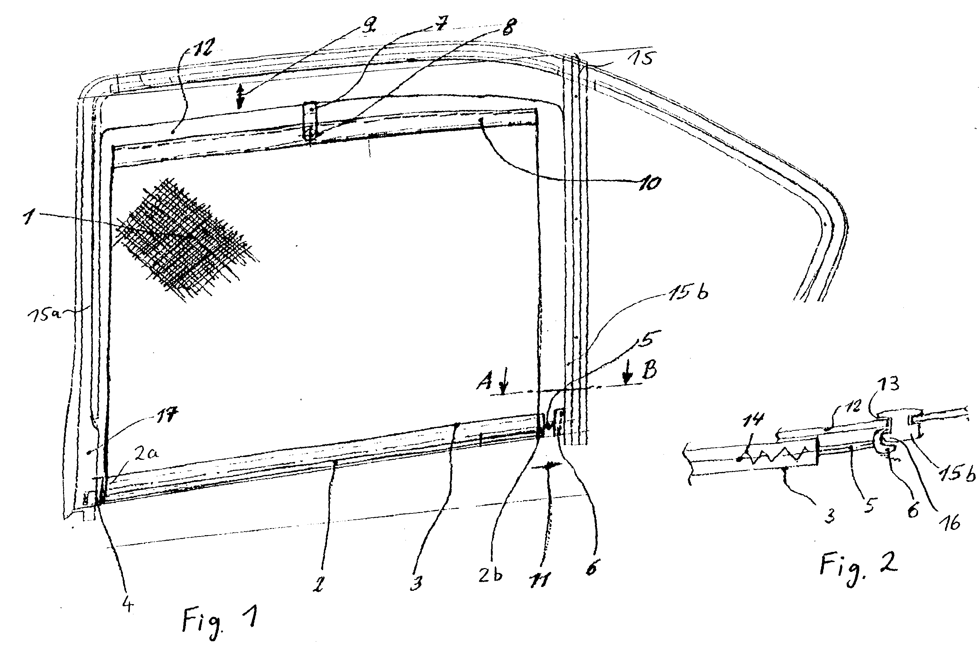

In der dargestellten Ausführung ist das Seitenteil 4 am gemäß Fig. 1 linken Ende 2a der Kassette 2 fest angeordnet und befindet sich in Klemmeingriff mit dem gegenüberliegenden Rahmenteil 15a. Am gemäß Fig. 1 rechten Ende 2b der Kassette 2 ist das andere Seitenteil 6 nicht starr wie das Seitenteil 4, sondern in Längsrichtung der Wickelwelle 3 beweglich gelagert und in Richtung des benachbarten Rahmenteils 15b federnd vorgespannt. Hierzu ist das Seitenteil 6 am freien Ende eines Bolzens oder Stabes 5 angeordnet, welcher von einer Feder 14 in Richtung auf das gegenüberliegende Rahmenteil 15b vorgespannt wird, wie Fig. 2 erkennen läßt.

In der dargestellten Ausführung ist die Wickelwelle 3 als Rohr oder Hohlwelle ausgebildet, innerhalb derer der Stab 5 mit seinem inneren Ende koaxial und in deren Längsrichtung verschiebbar angeordnet ist, wobei der Stab 5 gleichzeitig auch noch als Lager für die Wickelwelle 3 dienen kann. Folglich sitzt auch die Feder 14 innerhalb der Wickelwelle 3, wie auch in Fig. 2 schematisch zu erkennen ist. Die Feder 14 greift mit ihrem Ende am Stab 5 an, während sie mit ihrem anderen Ende an der Wickelwelle 3 befestigt ist, wobei die Feder 14 als Spiralfeder ausgebildet ist und zumindest teilweise den Stab 5 umgibt. Bei dieser Konstruktion erfüllt die Feder 14 zwei Aufgaben: Zum einen dient sie in herkömmlicher Weise als Drehfeder zur Vorspannung der Wickelwelle 3 in Aufwickelrichtung; und zum anderen erzeugt sie eine Vorspannung in axialer Richtung auf den Stab 5, um diesen mit dem daran sitzenden Seitenteil 6 in Richtung 11 auf das benachbarte Rahmenteil 15b vorzuspannen. Je nach Befestigungsart kann die Feder 14 als Zug- oder Druckfeder ausgebildet sein Soll die Feder 14 als Zugfeder wirken, so ist sie an dem dem benachbarten Rahmenteil 15b zugewandten - gemäß Fig. 2 rechten - Ende an der Wickelwelle 3 und mit ihrem anderen - gemäß Fig. 2 linken - Ende am Stab 5 befestigt; soll die Feder 14 als Druckfeder wirken, so muß das dem benachbarten Rahmenteil 15b zugewandte - gemäß Fig. 2 rechte - Ende der Feder 14 am Stab 5 und das andere - gemäß Fig. 2 linke - Ende an der Wickelwelle 3 befestigt sein.

Es ist natürlich auch denkbar, die in Fig. 2 dargestellte Feder 14 nur für die axiale Vorspannung des Stabes 5 zu verwenden, indem das eine Ende der Feder 14 am Stab 5 und das andere Ende an der Kassette 2 befestigt ist. Alternativ kann beispielsweise das Seitenteil 4 wie das Seitenteil 6 ebenfalls auf einem (in den Figuren nicht dargestellten) Stab befestigt sein, welcher innerhalb der Wickelwelle 3 koaxial zu dieser angeordnet ist, gegebenenfalls zusätzlich auch noch als Lager der Wickelwelle 3 dient und sich bis zur Feder 14 erstreckt, so daß sich diese dort abstützen kann.

Bei der zuvor beschriebenen Ausführung ist nur das Seitenteil 6 in Längsrichtung der Wickelwelle 3 beweglich und Richtung 11 auf das benachbarte Rahmenteil 15b federnd vorgespannt, während das Seitenteil 4 fixiert ist. Selbstverständlich ist es alternativ auch denkbar, das Seitenteil 4 in gleicher Weise wie das Seitenteil 6 gemäß Fig. 2 zu lagern, so daß auch das Seitenteil 4 in Längsrichtung der Wickelwelle 13 beweglich angeordnet und in Richtung auf das benachbarte Rahmenteil 15a federnd vorgespannt ist, wozu eine zusätzliche Feder vorzusehen ist.

Somit wird ein Teleskop gebildet, das unter nach außen gerichteter federnder Vorspannung steht, wodurch die Kassette 2 und somit die Wickelwelle 3 zwischen den Rahmenteilen 15a und 15b eingeklemmt werden kann, wobei sich das so gebildete Teleskop in Abhängigkeit vom Federweg der Feder 14 an den Abstand den beiden Rahmenteilen 15a, 15b anpaßt.

An den innenliegenden Rändern des Rahmens 15 sind Nuten zur Führung der Fensterscheibe 12 ausgebildet. In Fig. 2 ist die Nut 13 im vertikalen Rahmenteil 15b erkennbar, in der die Fensterscheibe 12 geführt ist. Für einen besonders wirkungsvollen Klemmeingriff mit dem vertikalen Rahmenteil 15b ist das Seitenteil 6 gabelförmig ausgebildet, wie Fig. 2 erkennen läßt. Dabei umgreift das gabelförmige Seitenteil 6 einen an der Innenseite des vertikalen Rahmenteils 15b ausgebildeten und die Nut 13 begrenzenden Längssteg 16, indem das gabelförmige Seitenteil 6 mit seiner einen Hälfte in die Nut 13 zwischen Längssteg 16 und Fensterscheibe 12 gesteckt ist und mit seiner anderen Hälfte den Längssteg 16 an dessen anderer Seite in Richtung von der Nut 13 weg umgreift.

In diesem Zusammenhang sei erwähnt, daß das Seitenteil 4 in gleicher Weise wie das Seitenteil 6 gabelförmig ausgebildet sein kann, was sich im übrigen auch bereits deshalb anbietet, da auch am vertikalen Rahmenteil 15a eine Nut ähnlich der Nut 13 vorhanden ist.

Obwohl es sich bei dem zuvor beschriebenen Rollo um ein - vorzugsweise nachrüstbares - Seitenfensterrollo für Kraftfahrzeuge handelt, sei an dieser Stelle noch einmal darauf hingewiesen, daß die zuvor beschriebene Konstruktion bei jeder Art von Rollo für den Einsatz in beliebigen Tür- und Fensterrahmen, in der Laibung eines Fensters oder allgemein in jeder Art von Öffnungen oder Durchbrüche begrenzenden Einfassung eingesetzt werden kann.

## Patentansprüche

1. Rollo, insbesondere für Seitenfenster von Kraftfahrzeugen mit
einem Behang (1),
einer den Behang (1) auf- und abwickelnden Wickelwelle (3) und
einer Halteeinrichtung (2, 4, 5, 6, 14), an der die Wickelwelle (3) um ihre Längsachse drehbar gelagert ist, zur Halterung der Wickelwelle (3) an einem Abschnitt (15a, 15b) eines Rahmens (15) o.dgl., insbesondere eines Tür- oder Fensterrahmens,
dadurch gekennzeichnet, daß die Halteeinrichtung (2, 4, 5, 6, 14) mindestens zwei Klemmittel (4 und 5, 6) für einen Klemmeingriff mit dem Abschnitt (15a, 15b) des Rahmens 15 aufweist, wobei mindestens ein Klemmittel (5, 6) etwa in Längsrichtung der Wickelwelle (3) beweglich gelagert und in Richtung (11) auf den benachbarten Rahmenabschnitt (15b) federnd vorgespannt ist.

2. Rollo nach Anspruch 1,
dadurch gekennzeichnet, daß der Abstand der Klemmittel (4 und 5, 6) zueinander einstellbar ist.

3. Rollo nach Anspruch 1 oder 2,
dadurch gekennzeichnet, daß das eine Klemmittel (4) über das eine Ende und/oder das andere Klemmittel (5, 6) über das andere Ende der Wickelwelle (3) hinausragt.

4. Rollo nach Anspruch 3,
bei welchem die Wickelwelle (3) hohl ist,
dadurch gekennzeichnet, daß das eine und/oder andere Klemmittel (4 und/oder 5, 6) teilweise innerhalb der Wickelwelle (3) angeordnet ist und mit seinem äußeren Ende aus dem entsprechenden Ende der Wickelwelle (3) herausragt.

5. Rollo nach mindestens einem der Ansprüche 1 bis 4,
dadurch gekennzeichnet, daß zumindest ein Abschnitt (5) des oder der Klemmittel (5, 6) als Stab ausgebildet ist.

6. Rollo nach den Ansprüchen 4 und 5,
dadurch gekennzeichnet, daß das Klemmittel (5, 6) mit seinem stabförmigen Abschnitt (5) koaxial zur Wickelwelle (3) angeordnet ist.

7. Rollo nach Anspruch 6,
dadurch gekennzeichnet, daß die Wickelwelle (3) am stabförmigen Abschnitt (5) des Klemmittels (5, 6) drehbar gelagert ist.

8. Rollo nach mindestens einem der Ansprüche 1 bis 7,
dadurch gekennzeichnet, daß das eine Klemmittel hohl ist und das andere Klemmittel nach Art eines Teleskops teilweise aufnimmt.

9. Rollo nach mindestens einem der Ansprüche 1 bis 8,
bei welchem die Wickelwelle (3) in Aufwickelrichtung durch eine Feder (14) vorgespannt ist,
dadurch gekennzeichnet, daß die Feder (14) mit ihrem Ende an der Wickelwelle (3) und mit ihrem anderen Ende an einem Klemmittel (5, 6) befestigt ist und dadurch gleichzeitig dieses Klemmittel (5, 6) in Richtung (11) auf den benachbarten Rahmenabschnitt (15b) vorspannt.

10. Rollo nach Anspruch 9,
dadurch gekennzeichnet, daß die Feder (14) eine Spiralfeder ist.

11. Rollo nach den Ansprüchen 7 und 10,
dadurch gekennzeichnet, daß die Feder (14) zumindest teilweise den stabförmigen Abschnitt (5) des Klemmittels (5, 6) umgibt.

12. Rollo nach mindestens einem der Ansprüche 1 bis 11,
für einen Fensterrahmen (15) mit einer Nut (13) zur Führung einer beweglichen Glasscheibe (12),
dadurch gekennzeihnet, daß mindestens ein Klemmittel (5, 6) an seinem freien Ende (6) derart ausgebildet ist, daß es in Eingriff mit der Nut (13) bringbar ist.

13. Rollo nach Anspruch 12,
dadurch gekennzeichnet, daß das freie Ende (6) des oder der Klemmittel (5, 6) gabelförmig ausgebildet ist.
